# EUROPEAN PATENT APPLICATION

(11) **EP 4 089 012 A1**
(43) Date of publication of application: **16.11.2022**
(21) Application number: 20911491.7
(22) Date of filing: 07.01.2020
(51) Int. Cl.: B64C 29/00, B64D 43/00

(54) **AIRCRAFT AND SYSTEM**

(71) Applicant: A.L.I. Technologies Inc., Tokyo 105-0011 (JP)
(72) Inventor: TAKAGI, Yutaka, Tokyo 105-0011 (JP); SHIROTA, Takeru, Tokyo 105-0011 (JP)
(74) Representative: Ipside
(86) International application number: PCT/JP2020/000113
(87) International publication number: WO 2021/140554

(57) **Abstract**

To provide a flying object or the like capable of more accurately grasping an attitude of the flying object.

A flying object according to the present technology includes: an airframe including a rotary wing part; a plurality of sensors each provided on a bottom side of the airframe, detecting an opposed surface, and measuring a distance from the surface; and a control device including an estimation unit that estimates an attitude of the airframe with respect to the surface on a basis of the distance at each position of the sensors obtained from the plurality of sensors.

## Description

### Technical Field

The present disclosure relates to a flying object and a system.

### Background Art

A flying object capable of floating and moving with a passenger thereon can move without receiving restriction to movement which a moving object such as a motorcycle moving on a land road is to receive in relation to other moving objects when moving on a surface of a land road, a water channel, or the like. Therefore, such a flying object is expected to be realized as new moving means.

For example, Patent Literature 1 discloses a technique related to a flying object also referred to as a so-called hover bike that floats and moves to a height of about 50 cm to 100 cm from the ground by rotation of a propeller in a state where a passenger is placed.

### Citation List

### Patent Literature

Patent Literature 1: JP 2019 -14396 A

### Summary of Invention

### Technical Problem

When the passenger drives such a flying object, it is important to control an attitude of the flying object. A surface on which the flying object travels is not necessarily limited to a paved road surface. Therefore, in controlling the attitude of the flying object, it is important to grasp not only an absolute attitude of the flying object but also an attitude of the flying object with respect to the surface.

The present technology has been made in view of the above circumstances, and an object thereof is to provide a flying object capable of more accurately grasping an attitude of the flying object.

### Solution to Problem

According to the present disclosure, there is provided a flying object including: an airframe including a rotary wing part; a plurality of sensors each provided on a bottom side of the airframe, detecting an opposed surface, and measuring a distance from the surface; and a control device including an estimation unit that estimates an attitude of the airframe with respect to the surface on a basis of the distance at each position of the sensors obtained from the plurality of sensors.

### Advantageous Effects of Invention

According to the technology of the present disclosure, the attitude of the flying object can be grasped more accurately.

### Brief Description of Drawings

Fig. 1 is a diagram illustrating an outline of a flying object according to an embodiment of the present disclosure.
Fig. 2 is a perspective view illustrating a configuration example of the flying object according to the embodiment.
Fig. 3 is a side view illustrating a configuration example of the flying object according to the embodiment.
Fig. 4 is a bottom view illustrating a configuration example of the flying object according to the embodiment.
Fig. 5 is a block diagram illustrating a hardware configuration example of the flying object according to the embodiment.
Fig. 6 is a block diagram illustrating an outline of a configuration of a control device according to the embodiment.
Fig. 7 is a block diagram illustrating an example of a configuration related to an attitude estimation function of a processor of the control device according to the embodiment.
Fig. 8 is a flowchart illustrating a first example of processing in the flying object according to the embodiment.
Fig. 9 is a flowchart illustrating a second example of processing in the flying object according to the embodiment.
Fig. 10 is a bottom view illustrating a configuration example of a flying object 1 according to a modification of the embodiment.

### Description of Embodiments

Hereinafter, preferred embodiments of the present disclosure will be described in detail with reference to the accompanying drawings. Note that, in the present specification and the drawings, components having substantially the same functional configuration are denoted by the same reference numerals, and redundant description is omitted.

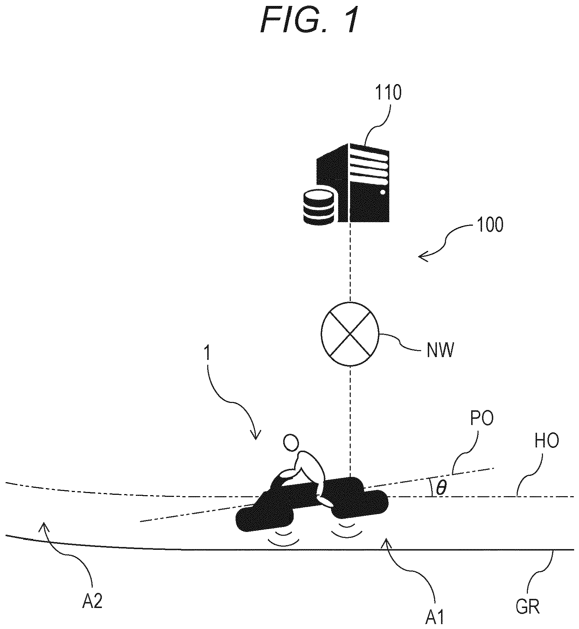

Fig. 1 is a diagram illustrating an outline of a flying object according to an embodiment of the present disclosure. As illustrated in Fig. 1, a flying object 1 is moving means called a so-called hover bike that can be boarded by a passenger and capable of floating to a height of about 50 cm to 100 cm from the ground and moving horizontally. The flying object 1 is configured to be connectable to a server 110 via an arbitrary wired or wireless network NW. A configuration realized by the flying object 1 and the server 110 is referred to as a system 100. The server 110 is a server realized by a single computer or a plurality of computers. For example, the server 110 can provide the flying object 1 with information on the surface on which the flying object 1 can move.

The flying object 1 is propelled while floating by lift and thrust generated by a rotary wing part while taking a forward tilting posture as described later. In the movement of the flying object 1, the attitude of the flying object 1 is important. By accurately controlling the attitude of the flying object 1, it is possible to more reliably control the speed and the turning direction in the movement of the flying object 1.

Referring again to Fig. 1, the flying object 1 moves while maintaining an appropriate height on a surface GR. The surface GR is not constant, and for example, the surface GR is inclined or uneven. Specifically, as illustrated in Fig. 1, there are a flat portion A1 and a portion A2 inclined in a rising direction. Then, unlike a normal flying object, the flying object 1 flies near the surface GR, and thus the shape of the surface GR has a large influence on a floating state of the flying object 1. Therefore, it is difficult to perform control simply by taking the absolute attitude of the flying object 1.

Therefore, in an example of the present technology, the attitude (for example, an attitude PO of the flying object 1 with respect to a reference plane HO parallel to the surface GR) of the flying object 1 with respect to the surface GR is estimated by measuring a distance between the flying object 1 and the surface GR. Such a distance is measured by a bottom sensor having a distance measuring function provided on a bottom surface of the flying object 1. By providing a plurality of the bottom sensors, it is possible to estimate the attitude of the flying object 1 (such as around a predetermined axis or a gradient of a surface) from the distance between each bottom sensor and the surface GR.

Furthermore, in a case where the flying object 1 is included in the system 100, the flying object 1 may transmit information on the surface GR detected by a bottom sensor or the like to the server 110. As a result, the information on the surface GR stored in advance in the server 110 can be updated on the basis of the information provided from the flying object 1. In this manner, the flying object 1 may function in the system 100 as a device for collecting information on the surface GR.

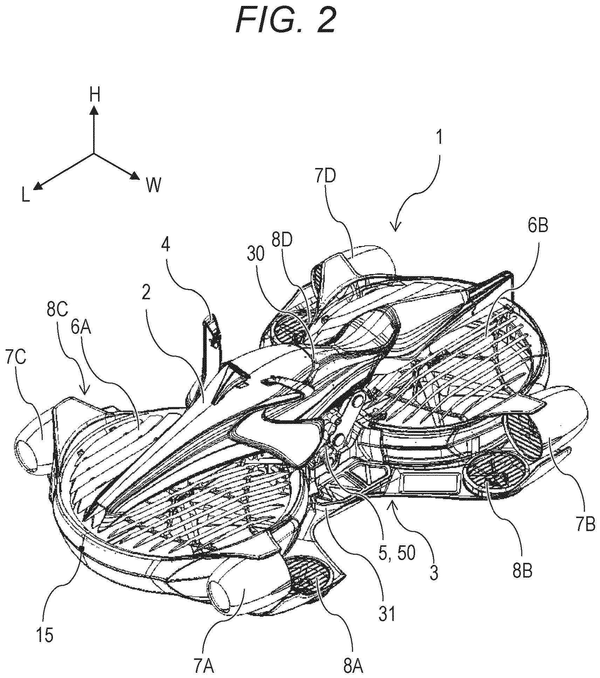

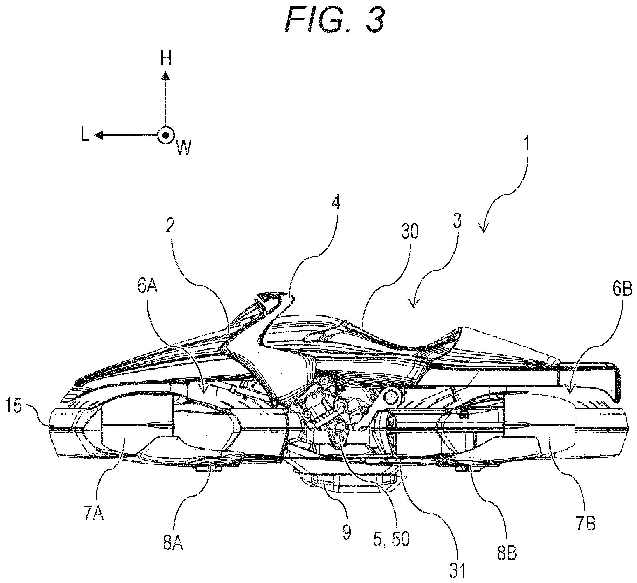

Figs. 2 to 4 are a perspective view, a side view, and a bottom view illustrating a configuration example of the flying object 1 according to an embodiment of the present disclosure. Note that, for each coordinate axis illustrated in each figure, L indicates a front-rear direction (front side is positive) of the flying object 1 (airframe 2), W indicates a width direction (left direction is positive) of the flying object 1 (airframe 2), and H indicates a vertical direction (upper side is positive) of the flying object 1 (airframe 2).

The flying object 1 includes an airframe 2, a saddle part 30, a gripping part 4, an engine 50 which is an example of a power unit 5, a first rotary wing part 6 (6A to 6B), a second rotary wing part 7 (7A to 7D), a third rotary wing part 8 (8A to 8D), an exhaust system 9, and a step 31. The flying object 1 also includes a bottom sensor 14. Further, the flying object 1 can include a front sensor 15. The first rotary wing part 6, the second rotary wing part 7, and the third rotary wing part 8 are examples of the rotary wing part. Further, a boarding part 3 is configured by the saddle part 30, the gripping part 4, and the step 31. In addition, the flying object 1 can also include other components, which will be described later.

The airframe 2 is formed extending in the front-rear direction in the upper part of the flying object 1. The airframe 2 can be formed of a material having a relatively small specific gravity and high strength, such as a carbon fiber-reinforced resin, a glass fiber-reinforced resin, aluminum, an aluminum alloy, a titanium alloy, or a magnesium alloy.

The boarding part 3 and the gripping part 4 are provided on the upper side of the central portion of the airframe 2 in the front-rear direction.

The boarding part 3 is a part of the airframe 2, and is connected to each rotary wing part. The boarding part 3 is a portion for a passenger to board. The saddle part 30 corresponds to a seat of the boarding part 3 which the passenger boards astride the airframe 2 of the flying object 1. The saddle part 30 may have a shape protruding downward so that the passenger can be stably seated. In addition, the step 31 is a portion for placing the passenger's foot when the passenger straddles the saddle part 30. In the illustrated example, the step 31 is provided so as to protrude in the width direction from the saddle part 30 in the planar direction and to be on the inner side of each rotary wing part to be described later. In the step 31, for example, a device for the passenger to operate the flying object 1 may be appropriately provided.

The gripping part 4 is provided to be gripped by a passenger astride the saddle part 30. The shape of the gripping part 4 is not limited to the illustrated shape. The gripping part 4 may be provided with an operation unit, an interface, and the like for the passenger to operate the flying object 1. Further, although the gripping part 4 is fixed to the airframe 2, the gripping part 4 may be provided so as to be relatively movable with respect to the airframe 2, or may be provided so as not to be movable (that is, in a completely fixed state). For example, the gripping part 4 may be movable like a steering having a rotation axis in a direction along a vertical direction H with respect to the airframe 2, or may be a lever movable in a direction along a front-rear direction L with respect to the airframe 2. The gripping part 4 may be provided with an operation unit such as a button, a lever, or a steering, and an input signal input to the operation unit can be transmitted to a control device 10 described later.

The engine 50, which is an example of the power unit 5, is provided below the airframe 2 and below the saddle part 30. Note that the engine 50 illustrated in Fig. 2 may actually be only partially visible from the outside of the airframe 2, and is displayed so as to be entirely visible from the side view in order to indicate the positional relationship in the present specification. Examples of the engine 50 include a gasoline engine, a diesel engine, and a gas engine, and the mechanism of the engine 50 is not particularly limited.

The first rotary wing part 6 is an example of a lift generating wing part that generates lift for floating the airframe 2. A pair of first rotary wing parts 6A and 6B are provided in front of and behind the power unit 5. In the example illustrated in Figs. 1 and 2, the first rotary wing parts 6A and 6B are provided below the tapered frame constituting the front and rear portions of the airframe 2 in the front and rear portions of the power unit 5. With such a frame shape, a large amount of gas can be smoothly taken into the first rotary wing part 6.

The first rotary wing part 6 includes a propeller for generating lift and a duct accommodating the propeller and having ventilation ports at upper and lower ends. The propeller is, for example, a so-called contra-rotating propeller in which a pair of vertically superposed blade groups rotate in opposite directions. The rotation of the propeller generates an air flow from the upper side to the lower side. Lift is generated in the airframe 2 by the airflow, and the airframe 2 can be floated. Note that the first rotary wing part 6 according to the present embodiment is provided on each of the front and rear portions of the airframe 2, but the first rotary wing part 6 may be provided on at least one of the front and rear portions. By inclining the airframe 2 in a pitch direction (the rotation direction with a width direction W as the rotation axis) or a roll direction (the rotation direction with the front-rear direction L as the rotation axis) or by inclining the first rotary wing part 6, horizontal thrust is generated by the first rotary wing part 6. Thus, the flying object 1 can be propelled.

In addition, a louver may be provided in at least one of the ventilation ports at the upper and lower ends of the duct of the first rotary wing part 6 (preferably on the upper end side). For example, as illustrated in Fig. 2, the louver may have a strip shape, be disposed in the width direction, and be provided so as to be inclined downward from the outside to the center side with the front-rear direction L as the central axis. With such a louver, entry of foreign matter into the duct can be suppressed. In addition, when the louver is provided, even when something scatters from the inside of the duct, the louver may obstruct scattered objects. In addition, the flow of gas flowing in from above can be regulated. In addition, when the louver is provided, it is difficult for the passenger boarding the flying object 1 to see the propeller, so that the fear of the passenger can be relieved.

A variable flap mechanism may be provided in a part of the duct of the first rotary wing part 6. Such a flap mechanism can control the flow amount and/or the flow direction of the gas flowing in or out. As a result, the flight control of the flying object 1 can be performed more precisely.

The second rotary wing part 7 is an example of a thrust generating wing part for applying thrust to the airframe 2. In particular, the second rotary wing part 7 can apply thrust to the airframe 2 mainly in the front-rear direction of the airframe 2. The second rotary wing part 7A is provided on the front left side of the airframe 2, the second rotary wing part 7B is provided on the rear left side of the airframe 2, the second rotary wing part 7C is provided on the front right side of the airframe 2, and the second rotary wing part 7D is provided on the rear right side of the airframe 2. For example, the second rotary wing parts 7A, 7B, 7C, and 7D are disposed in the width direction of the first rotary wing part 6 in front of and behind the airframe 2.

The second rotary wing part 7 includes a duct that allows gas to flow in the front-rear direction of the airframe 2 and a propeller that generates thrust inside the duct. The duct is provided with flow ports at ends in the front-rear direction. The propeller may be, for example, a contra-rotating propeller or a single propeller. In addition, a rotation direction and a pitch angle of the propeller may be appropriately changed by a control device 10, a motor driver 13, or the like to be described later. As a result, the second rotary wing part 7 can generate thrust along at least one of the front-rear directions of the airframe 2. Note that the second rotary wing part 7 normally generates forward thrust of the airframe 2, but may generate backward thrust. The second rotary wing part 7 is used, for example, to change the speed of the flying object 1 or to perform control to rotate the flying object 1 around a yaw axis (axis in a direction along the vertical direction H).

The third rotary wing part 8 is an example of a thrust generating wing part for applying thrust to the airframe 2. In particular, the third rotary wing part 8 can apply thrust to the airframe 2 mainly in the vertical direction of the airframe 2. The third rotary wing part 8A is provided on the front left side of the airframe 2, the third rotary wing part 8B is provided on the rear left side of the airframe 2, the third rotary wing part 8C is provided on the front right side of the airframe 2, and the third rotary wing part 8D is provided on the rear right side of the airframe 2. For example, the third rotary wing parts 8A, 8B, 8C, and 8D are disposed in the width direction of the first rotary wing part 6 in front of and behind the airframe 2.

The third rotary wing part 8 includes a casing that allows gas to flow in the vertical direction of the airframe 2, and a propeller that generates thrust inside the casing. The casing is provided with a flow port at each of an upper end and a lower end. The propeller may be, for example, a contra-rotating propeller or a single propeller. In addition, a rotation direction and a pitch angle of the propeller may be appropriately changed by a control device 10, a motor driver 13, or the like to be described later. As a result, the third rotary wing part 8 can generate thrust along at least one of the vertical directions of the airframe 2. Note that the third rotary wing part 8 normally generates upward thrust of the airframe 2, but may generate downward thrust. The third rotary wing part 8 is used, for example, as an auxiliary role at the time of floating by the first rotary wing part 6 of the flying object 1, to control the attitude of the flying object 1, or to control the flying object 1 to rotate about the pitch axis (axis in the direction along the width direction W) and/or about the roll axis (axis in the direction along the front-rear direction L).

The exhaust system 9 is a system that processes exhaust gas discharged from the engine 50. As the exhaust system 9, for example, a known exhaust device or the like can be used. The exhaust system 9 is provided below the saddle part 30. In the example illustrated in Fig. 2, the exhaust system 9 is provided below the engine 50.

A plurality of bottom sensors 14 (14A to 14D) are provided on the bottom side of the airframe 2. The bottom sensor 14 has a function of detecting a surface facing the airframe 2 and measuring a distance to the surface. The bottom sensor 14 has a distance measuring function of, for example, a laser sensor, an ultrasonic sensor, or the like. The type of the bottom sensor 14 provided in the airframe 2 is not particularly limited, but a plurality of types of sensors may be provided so that the measurement accuracy does not change even if a flight state of the flying object 1 and/or the state of the opposed surface (for example, a road surface with severe unevenness, a water surface, or the like) changes.

Specifically, as the bottom sensor 14, at least a laser sensor and an ultrasonic sensor may be provided in combination on the airframe 2. Since the laser sensor is fast in response, it is possible to measure the distance to the surface without losing the real-time property. On the other hand, the laser sensor has a limited measurement range, and in a case where the surface is a water surface or a mirror surface, the laser is likely to be totally reflected, and the measurement accuracy of the distance may be deteriorated. Therefore, by using the ultrasonic sensor in combination, the distance can be stably measured although the response is slower than that of the laser sensor. At least these two types of sensors may be measured simultaneously, or may be controlled such that sensors to be used are switched in accordance with a predetermined condition.

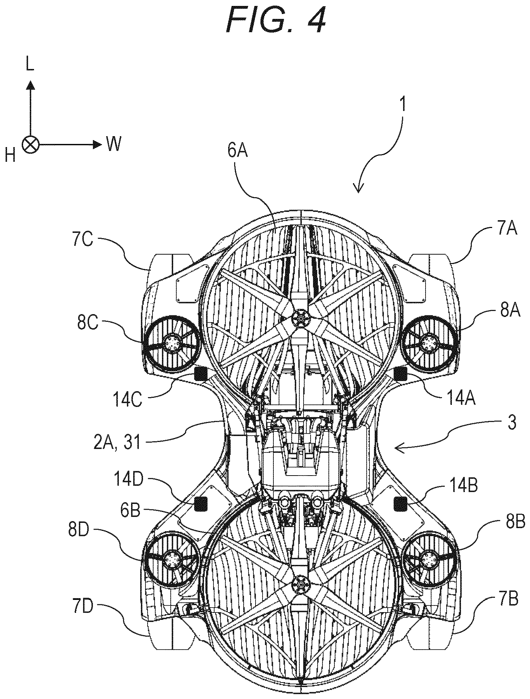

As illustrated in Fig. 4, for example, the bottom sensors 14A to 14D can be provided at an end 2A of the airframe 2 or in the vicinity of the end 2A. A portion that can contact the surface first when the airframe 2 is inclined is the end 2A of the airframe 2. That is, the end 2A corresponds to an outer edge portion of the flying object 1 when the flying object 1 is viewed from above or below. By providing the bottom sensor 14 at or near the end 2A, the approach between the airframe 2 and the surface can be detected quickly.

Furthermore, as illustrated in Fig. 4, the bottom sensor 14 can be provided at a portion protruding from the boarding part 3 in the width direction of the flying object 1 (airframe 2). Specifically, as shown in Fig. 4, the bottom sensor 14 is provided on the bottom side of a member extending from the step 31 to each third rotary wing part 8. Such an installation position can be in the vicinity of the rotary wing part (portions constituting the first rotary wing part 6, the second rotary wing part 7, and the third rotary wing part 8), more specifically, in the vicinity of the third rotary wing part 8. Since it is provided at such a position, feedback to the output of the rotary wing part for controlling the attitude when the airframe is inclined can be accelerated.

Information obtained by the bottom sensor 14 is transmitted to the control device 10 described later.

A modification of the installation position of the bottom sensor 14 will be described later.

The front sensor 15 is a sensor provided in front of the airframe 2 and directed in a direction in which the flying object 1 travels. The front sensor 15 has a function of detecting a surface in the direction in which the flying object 1 travels. That is, the front sensor 15 can detect a surface in an area different from that of the bottom sensor 14. The front sensor 15 may be, for example, a sensor capable of detecting a surface in a range of about 5 m to 80 m of the flying object 1. The front sensor 15 can be, for example, a laser sensor, an ultrasonic sensor, a radar, or the like.

Information obtained by the front sensor 15 is transmitted to the control device 10 described later.

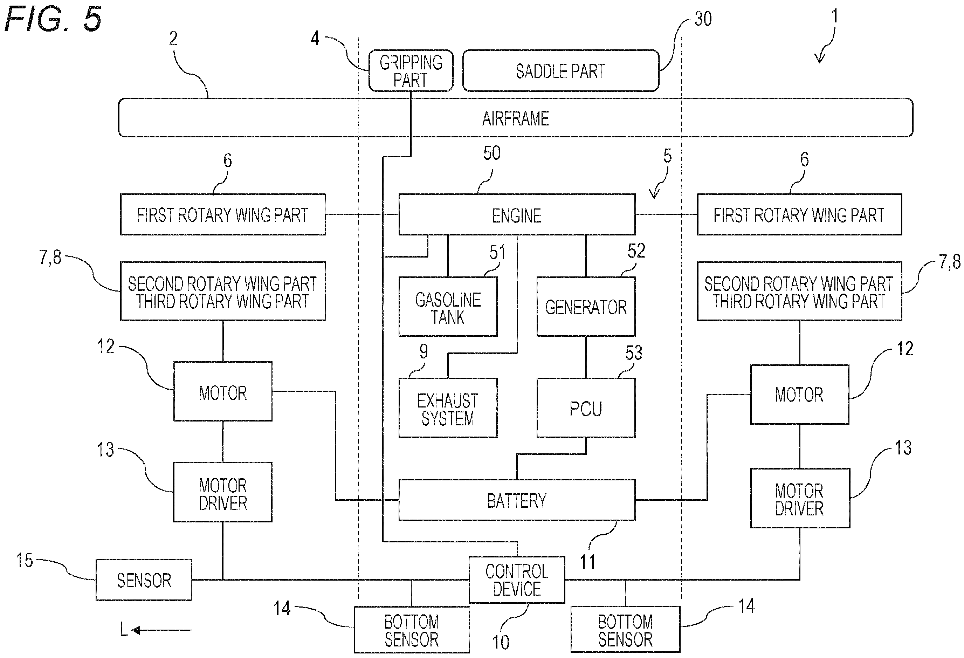

Next, components of the flying object 1 will be described in more detail with reference to Fig. 5. Fig. 5 is a block diagram illustrating a hardware configuration example of the flying object 1 according to the present embodiment. Note that description of the components already described above is omitted. A broken line illustrated in Fig. 5 is a virtual boundary line that defines a front portion, a central portion (boarding part), and a rear portion of the flying object 1 (airframe 2). That is, the area where the saddle part 30 is provided corresponds to the boarding part 3 of the airframe 2. An arrow L illustrated in Fig. 5 indicates a forward direction of the airframe 2.

As illustrated in Fig. 5, the saddle part 30, the gripping part 4, and the power unit 5 are provided in a central portion of the airframe 2, and the exhaust system 9, the control device 10, and a battery 11 can be further provided. In addition, the bottom sensor 14 according to the present embodiment can also be provided at the central portion of the airframe 2.

The power unit 5 may include a gasoline tank 51, a generator 52, and a power control unit (PCU) 53 in addition to the engine 50. The gasoline tank 51 stores gasoline to be supplied to the engine 50. The generator 52 has a function of generating electric power by power obtained using the engine 50 as a power source. The generator 52 is controlled by the PCU 53, and the generated electric power is stored in, for example, the battery 11. The PCU 53 has a function of performing power management of the battery 11. As the battery 11, an independent battery may be provided separately from the battery that stores the electric power generated by the generator 52. For example, a battery for storing the electric power generated by the generator 52 may be used for a substrate and sensors constituting the control device 10 of the airframe 2, and the independent battery may be used for power of a motor 12.

In addition to the first rotary wing part 6, the second rotary wing part 7, and the third rotary wing part 8, the motor 12 and the motor driver 13 are provided for each of the second rotary wing part 7 and the third rotary wing part 8 at the front part and the rear part of the airframe 2.

In the present embodiment, power generated by the engine 50 is transmitted to the first rotary wing part 6 via a power shaft (not illustrated) or the like. On the other hand, power is directly transmitted to the second rotary wing part 7 and the third rotary wing part 8 from the motor 12 provided for each of the second rotary wing part 7 and the third rotary wing part 8 via a power shaft or the like.

In the present embodiment, the motor 12 is provided in association with each of the second rotary wing part 7 and the third rotary wing part 8, but the present technology is not limited to such an example. For example, the motor 12 may be provided at a lower portion of the saddle part 30 in the central portion of the airframe 2. In this case, the motor 12 is an example of the power unit 5. The number of the motors 12 is not particularly limited, and for example, the number of the motors 12 may correspond to the number of the second rotary wing parts 7 and the number of the third rotary wing parts 8.

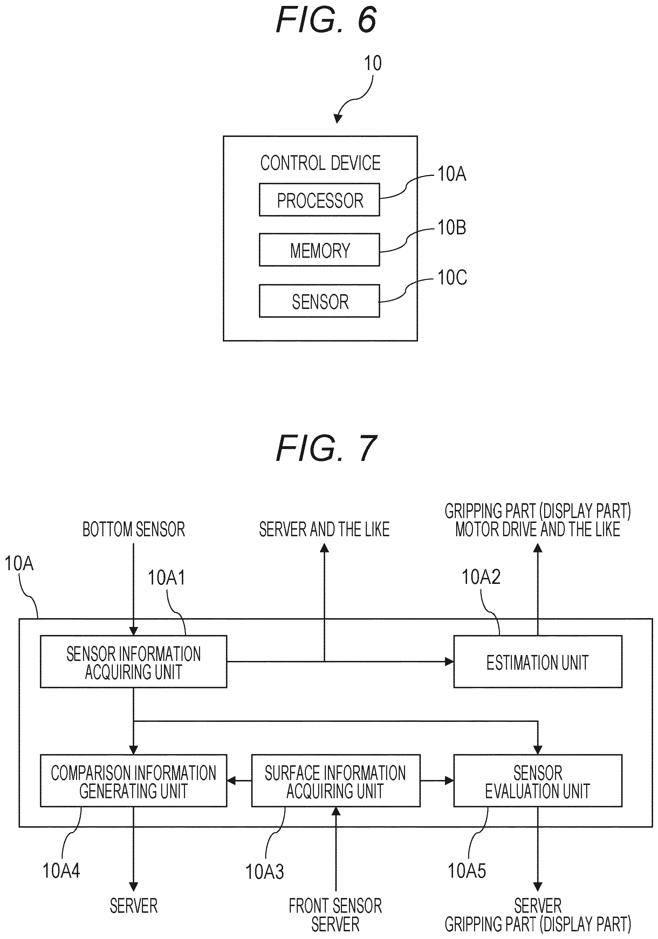

Fig. 6 is a block diagram illustrating an outline of a configuration of the control device 10 according to the present embodiment. As illustrated, the control device 10 includes a processor 10A, a memory 10B, and a sensor 10C as main components.

In the present embodiment, the processor 10A is configured by, for example, a central processing unit (CPU), and controls operation of each component of the flying object 1, and performs control of transmission and reception of data between the components, processing necessary for execution of a program, and the like.

The memory 10B includes a main storage device including a volatile storage device such as a dynamic random access memory (DRAM) and an auxiliary storage device including a nonvolatile storage device such as a flash memory or a hard disc drive (HDD). The memory 10B is used as a work area of the processor 10A, and stores various setting information and the like such as logics, codes, or program instructions executable by the control device 10.

In the present embodiment, the sensor 10C includes various sensors such as a force sensor, an inertial sensor (acceleration sensor, gyro sensor), a GPS sensor that receives radio waves from a GPS satellite, a proximity sensor, an optical or ultrasonic distance measuring sensor, a vision/image sensor (camera), an atmospheric pressure sensor that measures atmospheric pressure, and a temperature sensor that measures temperature. Unlike the bottom sensor 14, the front sensor 15, and the like, the sensor 10C includes a sensor provided as a configuration of the control device 10.

The control device 10 controls outputs of the engine 50 and the motor 12 on the basis of, for example, an input signal obtained from an operation unit provided in the gripping part 4 and signals obtained from various sensors. As a result, the rotation speed and the like of each of the rotary wing parts are controlled, and the flying object 1 floats or flies. Note that the position where the control device 10 is provided is not limited to the central portion or the like of the airframe 2.

In addition, the control device 10 according to the present embodiment estimates the attitude of the airframe 2 on the basis of the information obtained from the bottom sensor 14.

Fig. 7 is a block diagram illustrating an example of a configuration related to an attitude estimation function of the processor 10A of the control device 10 according to the present embodiment. As illustrated in Fig. 7, the processor 10A includes a sensor information acquiring unit 10A1 and an estimation unit 10A2. In addition, the processor 10A may include a surface information acquiring unit 10A3, a comparison information generating unit 10A4, and a sensor evaluation unit 10A5.

The sensor information acquiring unit 10A1 has a function of acquiring information (sensor information) obtained from the bottom sensor 14. Such sensor information is information obtained by measuring the surface of the lower part of the flying object 1 obtained by the bottom sensor 14. The sensor information acquiring unit 10A1 obtains information on the distance to the surface in each bottom sensor 14 on the basis of the acquired sensor information (for example, a distance measurement signal).

Information on the distance to the surface in each bottom sensor 14 is output to the estimation unit 10A2. Furthermore, the information may be output to an external server 110. Furthermore, the information may be output to the comparison information generating unit 10A4 and the sensor evaluation unit 10A5.

The estimation unit 10A2 has a function of estimating the attitude with respect to the surface of the airframe 2 on the basis of the distance to the surface in each bottom sensor 14. For example, the estimation unit 10A2 estimates a line or a surface configured by each bottom sensor 14 on the basis of the distance from the surface in each of the plurality of bottom sensors 14. Then, the estimation unit 10A2 can calculate an inclination direction and an inclination angle of the line or the surface and acquire the calculation result as the attitude of the airframe 2. Note that the estimation unit 10A2 may separately acquire information related to the attitude of the airframe 2 on the basis of information obtained from another sensor (for example, a gyro sensor) or the like, and estimate the shape of the surface on the basis of the information related to the attitude and the sensor information acquired from the bottom sensor 14. The estimation result of the shape of the surface can be used by the comparison information generating unit 10A4 described later.

For example, in a case where two bottom sensors 14 are provided, the inclination angle of a line connected between the bottom sensors 14 can be estimated by the estimation unit 10A2. Furthermore, in a case where three or more bottom sensors 14 are provided, the inclination direction and the inclination angle of the surface that can include the bottom sensor 14 can be estimated by the estimation unit 10A2. Note that, in a case where four or more bottom sensors 14 are provided, not all the bottom sensors 14 are necessarily positioned on the same plane. In this case, for example, an approximate plane may be estimated, and the estimation method may be a known method such as a least squares method.

The information related to the attitude of the airframe 2 estimated by the estimation unit 10A2 can be output to the gripping part 4, for example. The gripping part 4 may display the information on a display or the like that can be provided in the gripping part 4. As a result, the passenger can grasp the current attitude of the airframe. Furthermore, the information related to the attitude can be converted into a command value to the motor driver 13 and output to the motor driver 13. The motor driver 13 may control the rotation of the propeller of the second rotary wing part 7 and/or the third rotary wing part 8 on the basis of the command value. This makes it possible to more accurately control the airframe 2. Furthermore, the information related to the attitude of the airframe 2 may be appropriately transmitted to the server 110 or the like.

The surface information acquiring unit 10A3 has a function of acquiring information on a surface in the direction in which the flying object 1 travels. Such information may be, for example, sensor information obtained from the front sensor 15 provided in the flying object 1, or may be information acquired from the server 110. The information acquired from the server 110 may be, for example, surface information associated with map information in advance. In this case, the information on the surface on which the flying object 1 is scheduled to travel (that is, in the direction in which the flying object 1 travels) may be provided from the server 110 on the basis of a sensor (a position information sensor or the like) loaded on the flying object 1, a movement history of the flying object 1, and the like.

The information acquired by the surface information acquiring unit 10A3 is output to, for example, the comparison information generating unit 10A4 and/or the sensor evaluation unit 10A5.

The comparison information generating unit 10A4 has a function of generating information obtained by comparing information on the surface obtained by the surface information acquiring unit 10A3 with information obtained by the bottom sensor 14 detecting the surface corresponding to the information on the surface.

For example, it is assumed that the bottom sensor 14 detects the surface when the flying object 1 travels on the surface corresponding to the surface information obtained from the server 110. At this time, the comparison information generating unit 10A4 compares the surface information (preceding surface information) obtained from the server 110 with the information (for example, the estimation result of the shape of the surface described above. subsequent surface information) related to the surface detected by the bottom sensor 14. At this time, the preceding surface information and the subsequent surface information may be different beyond a predetermined condition. For example, this is a case where the surface is eroded, or the shape of the surface is changed due to construction or the like. Then, the comparison information generating unit 10A4 can generate information indicating that the subsequent surface information has changed from the preceding surface information. Such information can be transmitted to the server 110 along with the subsequent surface information. As a result, the server 110 can update the preceding surface information included in a surface information database on the basis of the subsequent surface information. Then, the accuracy of data included in the surface information database can be improved.

The sensor evaluation unit 10A5 has a function of evaluating the state of the bottom sensor 14 on the basis of the information on the surface obtained by the surface information acquiring unit 10A3 and the information obtained by the bottom sensor 14 detecting the surface corresponding to the information on the surface.

For example, it is assumed that the bottom sensor 14 detects the surface when the flying object 1 travels on the surface corresponding to the surface information obtained from the server 110. At this time, the comparison information generating unit 10A4 compares the surface information (preceding surface information) obtained from the server 110 with the information (subsequent surface information) related to the surface detected by the bottom sensor 14. At this time, the preceding surface information and the subsequent surface information may be different beyond a predetermined condition. For example, this is a case where the position where the bottom sensor 14 is provided is shifted, the orientation of the bottom sensor 14 is shifted, or the bottom sensor 14 is malfunctioning in the first place. Then, the sensor evaluation unit 10A5 can output information indicating that there is a possibility that an abnormality has occurred in the bottom sensor 14. Such information can be output to, for example, a display of the gripping part 4, the server 110, or the like. As a result, the passenger and the administrator of the flying object 1 can recognize the possibility of the abnormality of the bottom sensor 14.

Note that, in a case where the comparison information generating unit 10A4 and the sensor evaluation unit 10A5 are used in combination, for example, which function is preferentially exhibited may be determined in accordance with the degree of deviation between the preceding surface information and the subsequent surface information. Specifically, when the degree of deviation between the preceding surface information and the subsequent surface information partially occurs (that is, in a case where the deviation between the preceding surface information and the subsequent surface information is small at most of the time points during the progress), the function of the comparison information generating unit 10A4 may be preferentially executed. On the other hand, in a case where the degree of deviation between the preceding surface information and the subsequent surface information constantly occurs, abnormality of the bottom sensor 14 is considered, and thus the function of the sensor evaluation unit 10A5 may be preferentially executed.

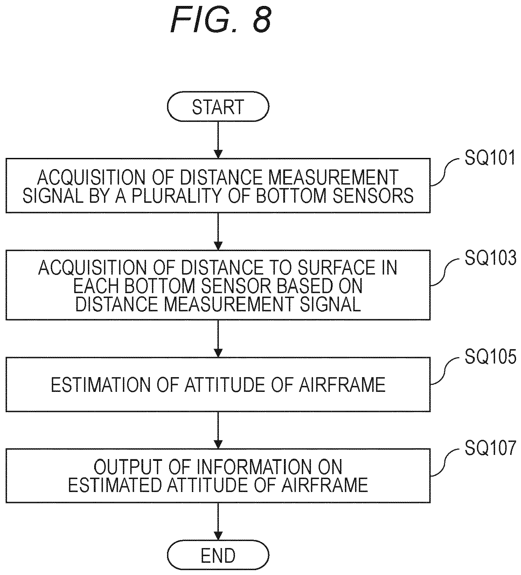

Next, an example of processing in the flying object 1 according to the present embodiment will be described. Fig. 8 is a flowchart illustrating a first example of processing in the flying object 1 according to the present embodiment. The flowchart shown in Fig. 8 shows a flow of processing related to estimation of the attitude of the airframe 2 of the flying object 1.

First, while the flying object 1 is traveling, a distance measurement signal (an example of sensor information) is acquired by the plurality of bottom sensors 14 (SQ101). Next, the sensor information acquiring unit 10A1 acquires information related to the distance to the surface in each bottom sensor 14 on the basis of the distance measurement signal (SQ103).

Next, the estimation unit 10A2 estimates the attitude of the airframe 2 on the basis of the acquired information related to the distance (SQ105). Then, information on the estimated attitude of the airframe is appropriately output (SQ107).

Such processing can be repeatedly executed as appropriate while the flying object 1 is traveling.

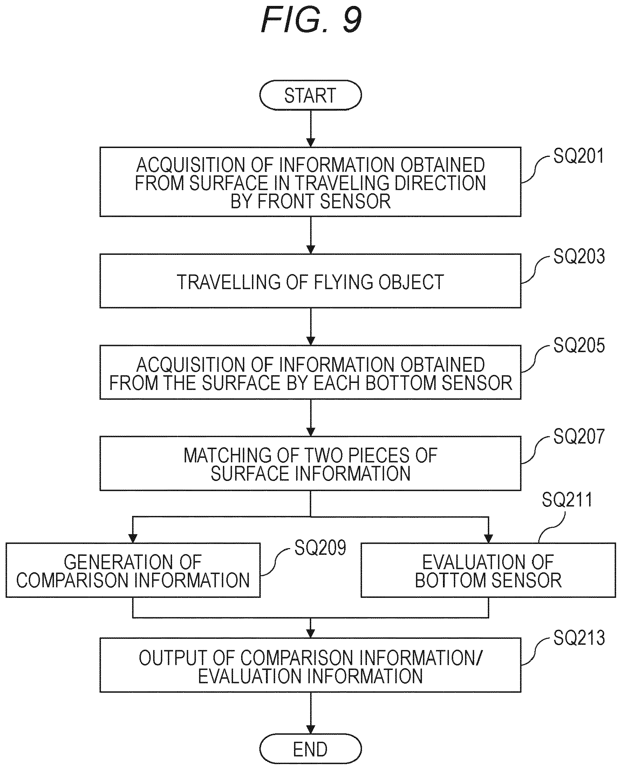

Fig. 9 is a flowchart illustrating a second example of processing in the flying object 1 according to the present embodiment. The flowchart illustrated in Fig. 9 illustrates a flow of processing in which the flying object 1 matches the surface information obtained from the front sensor 15 with the surface information obtained from the bottom sensor 14.

First, while the flying object 1 is traveling, the surface information acquiring unit 10A3 acquires information (preceding surface information) obtained from the surface of the flying object 1 in the traveling direction by the front sensor 15 (SQ201).

Next, the flying object 1 travels to such a surface (SQ203), each bottom sensor 14 detects the surface, and the sensor information acquiring unit 10A1 acquires surface information (subsequent surface information) from each bottom sensor 14 (SQ205).

Next, the comparison information generating unit 10A4 or the sensor evaluation unit 10A5 matches the preceding surface information with the subsequent surface information (SQ207). The comparison information generating unit 10A4 matches such information to generate comparison information (SQ209). Furthermore, the sensor evaluation unit 10A5 matches such information and evaluates the presence or absence of possibility of abnormality of the bottom sensor 14 and the like (SQ211). The comparison information and/or the evaluation information can be appropriately output (SQ213).

As described above, a sensor having a plurality of distance measuring functions is provided at the bottom of the flying object 1 according to the present embodiment, and the attitude of the flying object 1 can be estimated on the basis of information obtained from the distance to the traveling surface. By providing a plurality of such sensors, it is possible to relatively obtain the attitude of the flying object 1 with reference to the surface. Therefore, it is possible to accurately obtain information related to the attitude of the flying object 1 with respect to the surface.

### (Modification)

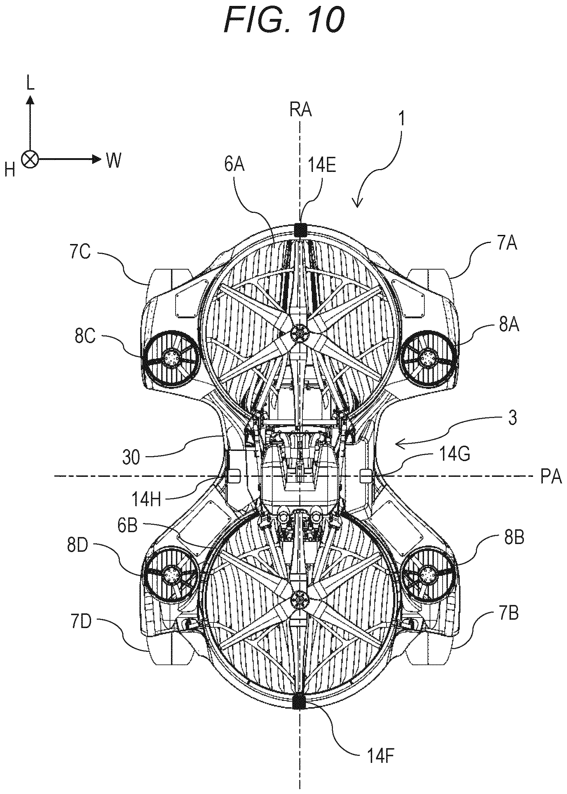

Next, a modification of the flying object 1 according to the present embodiment will be described. Fig. 10 is a bottom view illustrating a configuration example of a flying object 1 according to a modification of the present embodiment. The configuration of the flying object 1 illustrated in Fig. 10 is similar to that of the above embodiment except for the bottom sensor 14 (14E to 14H), and thus the description thereof is omitted.

Bottom sensors 14E and 14F illustrated in Fig. 10 are provided at ends of the flying object 1 in the front-rear direction. Specifically, the bottom sensor 14E is provided at a front end of the first rotary wing part 6A, and the bottom sensor 14F is provided at a rear end of the first rotary wing part 6B. Since the bottom sensor 14 is provided at the end in the front-rear direction as described above, it is possible to detect that the distance from the surface decreases before the end of the first rotary wing part 6 collides with the surface or the like even when the flying object 1 rotates greatly in the pitch direction.

As illustrated in Fig. 10, the bottom sensors 14E and 14F may be provided side by side along a roll axis RA. As a result, it is possible to accurately estimate the attitude in the pitch direction without being affected by the rotation in the roll direction.

Similarly, the bottom sensors 14G and 14H may be provided at ends in the width direction of the flying object 1. In this case, for example, as illustrated in Fig. 10, the bottom sensors 14G and 14H may be provided side by side along a pitch axis PA. As a result, it is possible to accurately estimate the attitude in the roll direction without being affected by the rotation in the pitch direction.

Further, the bottom sensor 14 may be provided in the boarding part 3 (corresponding to the central portion) of the airframe 2. That is, the bottom sensor 14 may be provided between the pair of rotary wing parts in the airframe 2 in the front-rear direction of the airframe 2. As a result, when the flying object 1 lands on the surface, it is possible to detect whether or not there is an obstacle on the surface on the bottom side of the boarding part 3 to be grounded.

Next, a system 100 according to another modification of the present embodiment will be described. In the system 100 according to the above embodiment, the server 110 can include a surface information database that stores surface information stored in advance. In the present modification, the server 110 may appropriately acquire information on a situation of a surface which the flying object 1 has acquired from the bottom sensor 14. In this case, the information on the situation of the surface may be acquired together with position information of the flying object 1. As a result, the server 110 can appropriately acquire terrain information and the like in an area where the flying object 1 can travel. The obtained terrain information can be appropriately transmitted to the flying object 1. Such information may be appropriately transmitted to the server 110 via a wireless network, for example, during traveling of the flying object 1 or the like.

Although the preferred embodiments of the present disclosure have been described in detail with reference to the accompanying drawings, the technical scope of the present disclosure is not limited to such examples. It is obvious that a person having ordinary knowledge in the technical field of the present disclosure can conceive various changes or modifications within the scope of the technical idea described in the claims, and it is naturally understood that these also belong to the technical scope of the present disclosure.

For example, in the above embodiment, the lift generating wing part (first rotary wing part 6) that generates lift for floating the airframe 2 and the thrust generating wing part (second rotary wing part 7, third rotary wing part 8) for applying thrust to the airframe 2 are provided as the rotary wing part, but the present technology is not limited to such an example. For example, as the thrust generating wing part, only the second rotary wing part 7 may be provided or only the third rotary wing part 8 may be provided as described in the above embodiment. Alternatively, only one of the lift generating wing part or the thrust generating wing part may be provided. In a case where only one of them is provided, alternative means for generating the other force can be appropriately adopted. In addition, only one of the engine or the motor may be provided as the power unit.

The series of processing by the control device described in the present specification may be realized using any of software, hardware, and a combination of software and hardware. A computer program for implementing each function of the control device 10 according to the present embodiment can be produced and mounted on a PC or the like. Furthermore, a computer-readable recording medium storing such a computer program can also be provided. The recording medium is, for example, a magnetic disk, an optical disk, a magneto-optical disk, a flash memory, or the like. Furthermore, the computer program described above may be distributed via, for example, a network without using a recording medium.

Furthermore, the processing described using the flowchart in the present specification may not necessarily be executed in the illustrated order. Some processing steps may be performed in parallel. In addition, additional processing steps may be employed, and some processing steps may be omitted.

Furthermore, the effects described in the present specification are merely illustrative or exemplary, and are not restrictive. That is, the technology according to the present disclosure can exhibit other effects obvious to those skilled in the art from the description of the present specification together with or instead of the above effects.

Note that the following configurations also belong to the technical scope of the present disclosure.

### (Item 1)

A flying object including:
an airframe including a rotary wing part;
a plurality of sensors each provided on a bottom side of the airframe, detecting an opposed surface, and measuring a distance from the surface; and
a control device including an estimation unit that estimates an attitude of the airframe with respect to the surface on a basis of the distance at each position of the sensors obtained from the plurality of sensors.

### (Item 2)

The flying object according to claim 1, in which at least one of the plurality of sensors is provided at or near an end of the airframe.

### (Item 3)

The flying object according to claim 1 or 2, in which
the airframe further includes a boarding part which is connected to the rotary wing part and through which a passenger boards,
a length of the rotary wing part in a width direction of the airframe is larger than a length of the boarding part in the width direction of the airframe, and
at least one of the plurality of sensors is provided at a portion protruding from the boarding part in the width direction of the airframe.

### (Item 4)

The flying object according to any one of claims 1 to 3, in which
a pair of the rotary wing parts are provided in a front-rear direction of the airframe, and
at least one of the plurality of sensors is provided between the pair of rotary wing parts of the airframe in the front-rear direction of the airframe.

### (Item 5)

The flying object according to any one of claims 1 to 4, in which
the plurality of sensors are two sensors, and
the two sensors are provided along a pitch axis or a roll axis of the airframe.

### (Item 6)

The flying object according to any one of claims 1 to 4, in which the plurality of sensors are three or more sensors.

### (Item 7)

The flying object according to any one of claims 1 to 6, in which the plurality of sensors include at least a laser sensor and an ultrasonic sensor.

### (Item 8)

The flying object according to any one of claims 1 to 7, in which the control device further includes a surface information acquiring unit that acquires information on a surface in a direction in which the flying object travels.

### (Item 9)

The flying object according to claim 8, in which the control device further includes a sensor evaluation unit that evaluates a state of the sensor on a basis of surface information obtained by the surface information acquiring unit and information obtained by the sensor detecting a surface corresponding to the surface information.

### (Item 10)

The flying object according to claim 8 or 9, in which the control device further includes a comparison information generating unit that generates information obtained by comparing the surface information obtained by the surface information acquiring unit with the information obtained by the sensor detecting a surface corresponding to the surface information.

### (Item 11)

The flying object according to any one of items 8 to 10, in which the surface information is generated on a basis of a signal obtained by a sensor that is provided in front of the airframe, is directed in a direction in which the flying object travels, and detects a surface in the direction in which the flying object travels.

### (Item 12)

The flying object according to any one of items 8 to 11, in which the surface information is acquired from a surface information database stored in a server.

### (Item 13)

A system including:
the flying object according to item 10; and
a server including a surface information database storing the surface information, in which
the flying object transmits information on a situation of the surface to the server, and
the server updates the surface information of the surface corresponding to the information on the situation of the surface stored in the surface information database on a basis of the information on the situation of the surface.

### Reference Signs List

- 1: flying object
- 2: airframe
- 3: boarding part
- 4: gripping part
- 5: power unit
- 6: first rotary wing part
- 7: second rotary wing part
- 8: third rotary wing part
- 9: exhaust system
- 10: control device
- 10A2: estimation unit

## Claims

1. A flying object comprising:
an airframe including a rotary wing part;
a plurality of sensors each provided on a bottom side of the airframe, detecting an opposed surface, and measuring a distance from the surface; and
a control device including an estimation unit that estimates an attitude of the airframe with respect to the surface on a basis of the distance at each position of the sensors obtained from the plurality of sensors.

2. The flying object according to claim 1, wherein at least one of the plurality of sensors is provided at or near an end of the airframe.

3. The flying object according to claim 1 or 2, wherein
the airframe further includes a boarding part which is connected to the rotary wing part and through which a passenger boards,
a length of the rotary wing part in a width direction of the airframe is larger than a length of the boarding part in the width direction of the airframe, and
at least one of the plurality of sensors is provided at a portion protruding from the boarding part in the width direction of the airframe.

4. The flying object according to any one of claims 1 to 3, wherein
a pair of the rotary wing parts are provided in a front-rear direction of the airframe, and
at least one of the plurality of sensors is provided between the pair of rotary wing parts of the airframe in the front-rear direction of the airframe.

5. The flying object according to any one of claims 1 to 4, wherein
the plurality of sensors are two sensors, and
the two sensors are provided along a pitch axis or a roll axis of the airframe.

6. The flying object according to any one of claims 1 to 4, wherein the plurality of sensors are three or more sensors.

7. The flying object according to any one of claims 1 to 6, wherein the plurality of sensors include at least a laser sensor and an ultrasonic sensor.

8. The flying object according to any one of claims 1 to 7, wherein the control device further includes a surface information acquiring unit that acquires information on a surface in a direction in which the flying object travels.

9. The flying object according to claim 8, wherein the control device further includes a sensor evaluation unit that evaluates a state of the sensor on a basis of surface information obtained by the surface information acquiring unit and information obtained by the sensor detecting a surface corresponding to the surface information.

10. The flying object according to claim 8 or 9, wherein the control device further includes a comparison information generating unit that generates information obtained by comparing the surface information obtained by the surface information acquiring unit with the information obtained by the sensor detecting a surface corresponding to the surface information.

11. The flying object according to any one of claims 8 to 10, wherein the surface information is generated on a basis of a signal obtained by a sensor that is provided in front of the airframe, is directed in a direction in which the flying object travels, and detects the surface in the direction in which the flying object travels.

12. The flying object according to any one of claims 8 to 11, wherein the surface information is acquired from a surface information database stored in a server.

13. A system comprising:
the flying object according to claim 10; and
a server including a surface information database storing the surface information, wherein
the flying object transmits information on a situation of the surface to the server, and
the server updates the surface information of the surface corresponding to the information on the situation of the surface stored in the surface information database on a basis of the information on the situation of the surface.
